Europäisches Patentamt

European Patent Office

Office européen des brevets

(11) Veröffentlichungsnummer: **0 128 576**
B1

## (12) EUROPÄISCHE PATENTSCHRIFT

(45) Veröffentlichungstag der Patentschrift:
**10.12.86**

(21) Anmeldenummer: **84106665.7**

(22) Anmeldetag: **12.06.84**

(51) Int. Cl.⁴: **C 21 C 5/46**, F 27 D 3/15

(54) **Verschlussorgan zum Zurückhalten der Schlacke während des Abstiches aus einem Konverter.**

(30) Priorität: **13.06.83  DE 8317252 U**

(43) Veröffentlichungstag der Anmeldung:
**19.12.84 Patentblatt 84/51**

(45) Bekanntmachung des Hinweises auf die Patenterteilung:
**10.12.86 Patentblatt 86/50**

(84) Benannte Vertragsstaaten:
**AT BE DE FR GB IT LU NL SE**

(56) Entgegenhaltungen:
**DE - A - 3 126 559**
**DE - B - 2 549 728**
**DE - C - 508 223**
**LU - A - 78 073**
**US - A - 3 727 668**

**PATENTS ABSTRACTS OF JAPAN, Band 6, Nr. 118
(C-111)(996), 2. Juli 1982
PATENTS ABSTRACTS OF JAPAN, Band 3, Nr. 104
(C-57), 4. September 1979, Seite 128 C 57
Ironmaking and Steelmaking no. 1(1981), p. 39-42**

(73) Patentinhaber: **Thyssen Stahl Aktiengesellschaft,
Kaiser-Wilhelm-Strasse 100, D-4100 Duisburg 11 (DE)**

(72) Erfinder: **Höffken, Erich, Dr. Ing., Schlehenhag 1,
D-4220 Dinslaken (DE)**
Erfinder: **Kliewer, Winfried, Barchemhöhe 31,
D-4300 Essen 11 (DE)**
Erfinder: **Florin, Wolfram, Dipl.-Ing., Kirchstrassse 162 a,
D-4220 Dinslaken (DE)**

(74) Vertreter: **Patentanwaltsbüro Cohausz & Florack,
Postfach 14 01 47, D-4000 Düsseldorf 1 (DE)**

## Beschreibung

Die Erfindung betrifft ein Verschlussorgan zum Zurückhalten der Schlacke während des Abstiches aus einem Konverter.

Das Problem der schlackenfreien Entnahme von Metallen aus kippbaren Schmelzöfen, insbesondere von Stahl aus Abstichkonvertern, ist seit langem bekannt. Es sind daher bereits verschiedene Vorrichtungen vorgeschlagen worden, die für diesen Zweck geeignet sind.

So beschreibt die DE-PS 15 08 223 einen Schwimmkörper, der an seiner Unterseite mit einer Führungsstange versehen ist, die durch das Stahlbad hindurch mit Spiel in das Abstichloch des Konverters hineinragt. Der Schwimmkörper weist an seinem oberen Teil eine Haltestange auf, die dazu dient, den Schwimmkörper mit einer besonderen Vorrichtung in den Konverter einzubringen.

Die Nachteile dieses bekannten Verschlussorgans bestehen darin, dass die Führungsstange beim Einbringen des Schwimmkörpers nicht exakt das Abstichloch trifft. Beim Absinken der Badhöhe im Konverter setzt die Stange dann nicht auf dem Abstichloch sondern daneben auf dem Konvertermauerwerk auf. Das Verschlussorgan wird in einem solchen Falle also nicht wirksam.

Es ist bekannt, dass diese Art Schwimmstopfen mit einer Erfolgsrate von nur 80% eingesetzt werden.

Es sind weiter Abstichverschlusskugeln bekannt, die kurz vor dem Ende des Abstichvorgangs bei umgelegtem Konverter im Bereich des Abstichlochs eingebracht werden, beispielsweise über eine durch den Konvertermund in das Innere des Konverters hineinragende Rinne. Diese Kugeln sind wie die vorbeschriebenen Schwimmkörper spezifisch schwerer als die Stahlwerkschlacke. Sie schwimmen daher unter der Schlacke auf dem Stahlbad, so dass sie nach dem Ausfliessen des Stahls durch das Abstichloch dieses verschliessen und damit ein Nachlaufen der Schlacke verhindern.

Die DE-OS 31 26 559 zeigt in Fig. 7 eine solche Abstichverschlusskugel, die aus feuerfestem Material besteht. Bei Einsatz der Abstichverschlusskugel aus feuerfestem Material ist aber, wie aus Seite 8, 4. Absatz der DE-OS 31 26 559 hervorgeht, damit zu rechnen, dass sich die Kugel von selbst setzt.

Nach «Ironmaking and Steelmaking» 1981, Nr. 1, Seiten 39 bis 42 besteht die Abstichverschlusskugel aus einer äusseren Hülle aus Gusseisen und einem inneren Kern aus einem feuerfesten Stein. Nachteilig bei diesem bekannten Verschlussorgan ist, dass der Aussenmantel der Kugel aus Gusseisen besteht, das bekanntlich einen wesentlich niedrigeren Schmelzpunkt als Stahl hat. Wie erwähnt, hält die Kugel nur dadurch, dass sie sich bei ihrem Fallweg durch die flüssige Schlacke mit Schlacke überzieht. Dies kann aber nur der Fall sein, wenn die Schlacke relativ dünnflüssig ist und die Kugel benetzt. Vor allem bei dem in jüngster Zeit entwickelten kombinierten Blasstahlverfahren sind die Schlacken während des Konverterabstichs jedoch sämig oder dickflüssig bis schollig, so dass nicht damit gerechnet werden kann, dass die Gusseisen-Kugeln eingeschlackt werden.

Der vorliegenden Erfindung liegt die Aufgabe zugrunde, ein Verschlussorgan zu schaffen, das eine verbesserte Haltbarkeit hat, eine exakte Einstellung des spezifischen Gewichtes ermöglicht und die Möglichkeit bietet, preiswerte Feuerfeststoffe einzusetzen.

Diese Aufgabe wird erfindungsgemäss durch ein Verschlussorgan gelöst, das aus einer metallischen Hülle aus zwei zu einer Kugel zusammengesetzen Halbkugelschalen aus Stahlblech besteht, die eine Mischung aus feuerfestem Material und stückigem Schrott enthält. Durch entsprechende Wahl der jeweiligen Schrottmenge in der Mischung kann das spezifische Gewicht der Kugel auf unterschiedliche Werte eingestellt werden.

Der in die feuerfeste Masse der Kugel eingelagerte Schrott kann auch aus einem oder mehreren grösseren Stücken bestehen. Die Schrottstücke können mittig in die Kugel eingelagert werden, es ist jedoch auch möglich, die Einlagerung des Schrotts in der Kugel einseitig vorzunehmen.

Bei einer bevorzugten Ausführungsform weist eine Halbkugelschale am äusseren Rand einen umlaufenden Falz zur Aufnahme des äusseren Randes der zweiten Halbkugelschale auf. Bei dieser bevorzugten Ausführungsform sind zur Verbindung der beiden Halbkugelschalen am äusseren Rand gleichmässig auf dem Umfang beider Schalen verteilt korrespondierende Bohrungen zur Aufnahme von Arretierungsstiften angeordnet.

Bei einer weiteren bevorzugten Ausführungsform ist zur Verbindung der beiden Halbkugelschalen eine Schweissnaht im Bereich der Falz gelegt. Eine Halbkugelschale weist dabei eine Einfüllöffnung für das feuerfeste Material und den stückigen Schrott auf.

Bei beiden Ausführungsformen wird kleinstückiger Schrott bevorzugt vollständig oder überwiegend im feuerfesten Material einer Halbkugelschale angeordnet.

Die Halbkugelschalen weisen ferner Löcher mit geringem Durchmesser auf, durch welche beim Trocknen der zusammengesetzten Kugeln die Feuchtigkeit aus dem feuerfesten Material entweichen kann.

Die Vorteile, die durch die Erfindung erzielt werden, sind u.a. darin zu sehen, dass durch die Wahl der Wandstärke der für die Halbkugelschalen verwendeten Stahlbleche die Haltbarkeit der Abstichverschlusskugel an die je nach Konvertergrösse unterschiedliche Verweilzeit in der Schmelze angepasst werden kann. Als feuerfestes Material kann ein preiswerter Feuerfeststoff, beispielsweise Natursand mit Wasserglaszusatz, verwendet werden.

Ein wichtiger Faktor für den bestimmungsgemässen Gebrauch von Abstichverschlusskugeln ist die Einstellung des spezifischen Gewichtes. Bei der erfindungsgemässen Abstichverschlusskugel kann das spezifische Gewicht exakt eingestellt werden, da das Volumen der tiefgezogenen Halbkugelschalen aus Stahlblech genau bekannt ist und die Einwaage des kleinstückigen Schrottes grammgenau vorgenommen werden kann. Durch die vorgesehene exzentrische Einlagerung des kleinstückigen Schrottes kann bei Einsatz der Abstichverschlusskugel im Konverter eine Drehung derselben verhindert bzw. eingeschränkt werden. Dies führt dazu, dass die Kugel im Bereich der Abstichöffnung des Konverters praktisch stehenbleibt.

Es wurde festgestellt, dass die Wirkung des erfindungsgemässen Verschlussorgans durch zu dünnflüssige oder zu dickflüssige Schlacke beeinträchtigt werden kann. Ist die auf der Schmelzbadoberfläche schwimmende Schlacke zu dünnflüssig, so kann es passieren, dass die aus grösserer Höhe auf die Schmelzbadoberfläche fallen gelassene Kugel die Schlackenschicht zu leicht durchdringt und bis zu grösserer Tiefe in das Schmelzbad eintaucht, wo sie von der ausfliessenden Schmelze zur Ausgussöffnung gesogen wird und diese zu frühzeitig verschliesst. Ist dagegen die Schlacke zu dickflüssig, kann es passieren, dass die Kugel gar nicht bis zur Schmelzbadoberfläche durch die Schlackenschicht hindurchkommt sondern auf der Schlackenbadoberfläche liegenbleibt.

Um diese Schwierigkeiten zu vermeiden ist es erfindungsgemäss vorgesehen, das Verschlussorgan zum Zurückhalten der Schlacke während des Abstichs aus einem Konverter, bestehend aus einer auf der Stahlbadoberfläche schwimmenden Kugel aus feuerfestem Material, gegebenenfalls mit einer metallischen Hülle, mit Mitteln zur Aufnahme einer Portion synthetischer Schlacke zur Einstellung der gewünschten Viskosität der auf der Stahlbadoberfläche schwimmenden Schlacke auszurüsten. Diese vom Verschlussorgan mitgeförderte synthetische Schlacke sorgt beim Auftreffen der Kugel auf die Schlackenbadoberfläche dafür, dass die Schlacke die gewünschte Viskosität erhält, um es zu ermöglichen, dass die Kugel auf der Stahlbadoberfläche schwimmt.

Gemäss einer bevorzugten Ausgestaltung der Erfindung kann die Kugel dazu ein im äusseren Bereich befestigbares Gefäss zur Aufnahme der Portion der synthetischen Schlacke aufweisen. Bei einer alternativen Ausführungsform befindet sich die Portion der synthetischen Schlacke in angeklebter Form am äusseren Bereich der Kugel.

Die Erfindung wird nachstehend anhand von zwei Ausführungsbeispielen näher erläutert und weitere Vorteile genannt. Es zeigen:

Fig. 1 eine erste Ausführungsform der erfindungsgemässen Abstichverschlusskugel, bei der die Verbindung der beiden metallischen Halbkugelschalen über Arretierstifte vorgenommen wird und

Fig. 2 eine weitere Ausführungsform der erfindungsgemässen Abstichverschlusskugel, bei der die beiden metallischen Halbkugelschalen durch eine Schweissnaht miteinander verbunden sind,

Fig. 3 den Ausschnitt A aus Fig. 1 in grösserem Massstab,

Fig. 4 den Ausschnitt B aus Fig. 2 in grösserem Massstab,

Fig. 5 u. 6 zeigen weitere Ausführungsbeispiele der Erfindung.

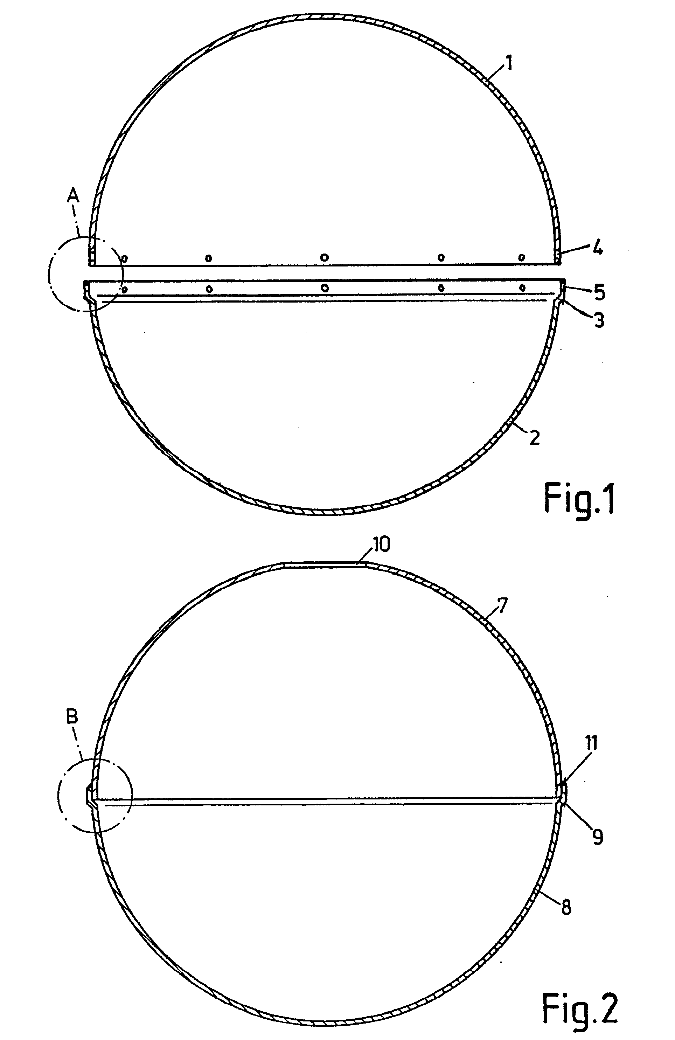

Die in Fig. 1 dargestellte Ausführung der erfindungsgemässen Abstichverschlusskugel zeigt die beiden aus tiefgezogenem Stahlblech bestehenden Halbkugelschalen 1 und 2. Diese beiden Halbkugelschalen werden vor dem Zusammenbau mit einer grammgenau ausgewogenen Mischung aus feuerfestem Material und kleinstückigem Schrott, z.B. Stiftenspitzenschrott, gefüllt. Auf diese Weise kann das erforderliche spezifische Gewicht exakt eingestellt werden.

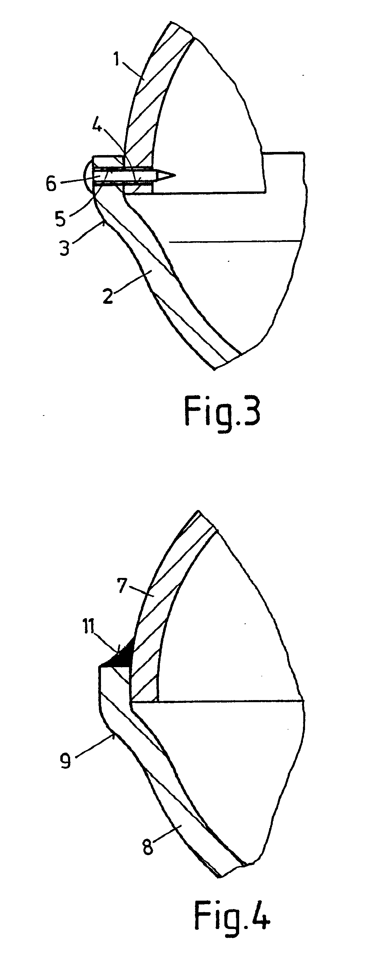

Die Halbkugelschale 2 besitzt an ihrem äusseren Rand eine umlaufende Falz 3, die so ausgebildet ist, dass sie den äusseren Rand der Halbkugelschale 1 beim Zusammenfügen der Halbschalen aufnimmt. Im Bereich der Falz 3 der Halbkugelschale 2 bzw. am äusseren Rand der Halbkugelschale 1 sind auf dem Umfang gleichmässig verteilt Bohrungen 4, 5 so angeordnet, dass beim Zusammenfügen jeweils eine Bohrung 4 und eine Bohrung 5 fluchten. In die übereinstimmenden Bohrungen 4, 5 werden Arretierstifte, z.B. in Form von Nägeln 6 eingeschlagen, wie Fig. 3 in vergrössertem Massstab zeigt.

Die Ausführungsform gemäss Fig. 2 besteht ebenfalls aus zwei Halbkugelschalen 7, 8 aus tiefgezogenem Stahlblech mit einer umlaufenden Falz 9 am äusseren Rand der Halbkugelschale 8. Die Halkugelschale 7 weist eine Einfüllöffnung 10 auf.

Die Herstellung der Abstichverschlusskugel geschieht in der Weise, dass nach Zusammenfügen der beiden Halbkugelschalen 7, 8 eine Schweissnaht 11 im Bereich der Falz 9 gelegt wird, wie in vergrössertem Massstab Fig. 4 zeigt. Durch die Einfüllöffnung 10 wird die grammgenau ausgewogene Mischung aus feuerfestem Material und kleinstückigem Schrott in die Hohlkugel eingebracht. Wie bei der Ausführungsform gemäss Fig. 1 kann hierdurch das erforderliche spezifische Gewicht der Abstichverschlusskugel exakt eingestellt werden.

Bei beiden Ausführungsformen sind gleichmässig auf der Oberfläche der Halbkugelschalen 1, 2 bzw. 7, 8 nicht dargestellte Schwitzlöcher mit kleinem Durchmesser verteilt angeordnet, durch welche beim Trocknen der Kugeln die Feuchtigkeit aus dem Feuerfestmaterial entweichen kann. Nach dem Trocknen sind die Abstichverschlusskugeln einsatzbereit.

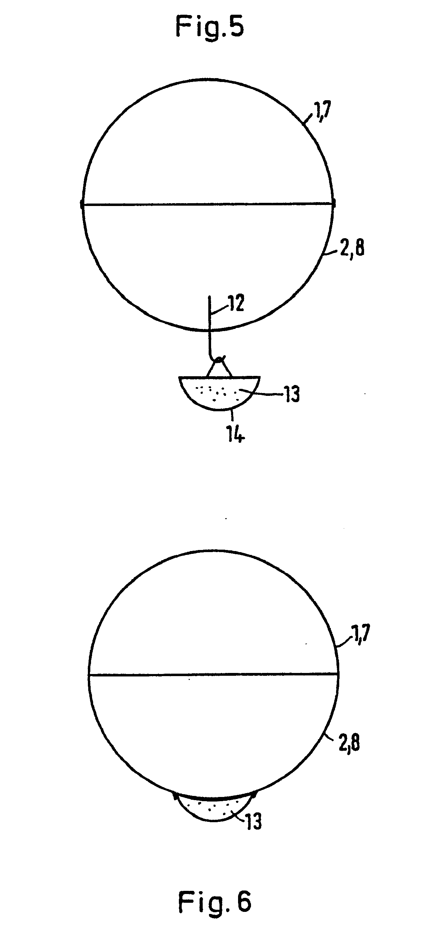

Fig. 5 zeigt eine Ausführung der Kugel 1, 2; 7, 8 mit einem an der unteren Halbkugelschale 2, 8 angebrachten Haken 12, an dem eine die Portion 13 der synthetischen Schlacke enthaltende Halbschale 14 befestigt ist.

Bei der Ausführung gemäss Fig. 6 ist die Portion 13 der synthetischen Schlacke an die untere Halbkugelschale 2, 8 angeklebt.

In beiden Fällen ist sichergestellt, dass die Portion 13 der synthetischen Schlacke sich mit der auf der Stahlbadoberfläche schwimmenden Schlacke im Bereich des Auftreffens des Verschlussorgans auf die Schlackenschicht leicht mischt und die Viskosität der Schlacke in der gewünschten Weise einstellt.

**Patentansprüche**

1. Verschlussorgan zum Zurückhalten der Schlacke während des Abstiches aus einem Konverter, bestehend aus einer auf der Stahlbadoberfläche schwimmenden Kugel aus feuerfestem Material und einer metallischen Hülle, dadurch gekennzeichnet, dass die metallische Hülle aus zwei zu einer Kugel zusammengesetzten Halbkugelschalen (1, 2; 7, 8) aus Stahlblech besteht, die eine Mischung aus feuerfestem Material und stückigem Schrott enthält.

2. Verschlussorgan nach Anspruch 1, dadurch gekennzeichnet, dass eine Halbkugelschale (2, 8) am äusseren Rand eine umlaufende Falz (3, 9) zur Aufnahme des äusseren Randes der zweiten Halbkugelschale (1, 7) aufweist.

3. Verschlussorgan nach Anspruch 1 oder 2, dadurch gekennzeichnet, dass zur Verbindung der beiden Halbkugelschalen (1, 2) am äusseren Rand gleichmässig auf dem Umfang beider Schalen verteilt korrespondierende Bohrungen (4, 5) zur Aufnahme von Arretierungsstiften (6) angeordnet sind.

4. Verschlussorgan nach Anspruch 1 oder 2, dadurch gekennzeichnet, dass zur Verbindung der beiden Halbkugelschalen (7, 8) eine Schweissnaht (11) im Bereich der Falz (9) angeordnet ist und die eine Halbkugelschale (7) eine Einfüllöffnung (10) aufweist.

5. Verschlussorgan nach Anspruch 1 bis 4, dadurch gekennzeichnet, dass der kleinstückige Schrott vollständig oder überwiegend im feuerfesten Material einer Halbkugelschale angeordnet ist.

6. Verschlussorgan nach einem der Ansprüche 1 bis 5, dadurch gekennzeichnet, dass der Schrott so in das Feuerfest-Material eingelagert ist, dass der Schwerpunkt der Kugel mit dem geometrischen Mittelpunkt der Kugel übereinstimmt.

7. Verschlussorgan nach einem der Ansprüche 1 bis 5, dadurch gekennzeichnet, dass der Schrott so in das Feuerfest-Material eingelagert ist, dass der Schwerpunkt der Kugel vom geometrischen Mittelpunkt abweicht.

8. Verschlussorgan zum Zurückhalten der Schlacke während des Abstichs aus einem Konverter, bestehend aus einer auf der Stahlbadoberfläche schwimmenden Kugel aus feuerfestem Material, gegebenenfalls mit einer metallischen Hülle, dadurch gekennzeichnet, dass es mit Mitteln zur Aufnahme einer Portion synthetischer Schlacke zur Einstellung der gewünschten Viskosität der auf der Stahlbadoberfläche schwimmenden Schlacke ausgerüstet ist.

9. Verschlussorgan nach Anspruch 8, dadurch gekennzeichnet, dass die Kugel (1, 2; 7, 8) ein im äusseren Bereich befestigbares Gefäss (14) zur Aufnahme der Portion (13) der synthetischen Schlacke aufweist.

10. Verschlussorgan nach Anspruch 8, dadurch gekennzeichnet, dass sich die Portion (13) der synthetischen Schlacke in angeklebter Form am äusseren Bereich der Kugel (1, 2; 7, 8) befindet.

## Claims

1. Closure device for holding-back the slag during tapping from a converter, consisting of a ball comprising refractory material and a metallic casing, which ball floats on the surface of the steel bath, characterised in that the metallic casing comprises two hemispherical shells (1, 2; 7, 8) which are assembled together to form a ball and which are made from sheet steel, containing a mixture of refractory material and lumpy scrap.

2. Closure device according to claim 1, characterised in that one hemispherical shell (2, 8) comprises at the outer edge an encircling fold (3, 9) for accomodating the outer rim of the second hemispherical shell (1, 7).

3. Closure device according to claim 1 or 2, characterised in that, in order to connect the two hemispherical shells (1, 2), corresponding holes (4, 5) distributed uniformly over the periphery of the two shells are arranged at the outer edge for receiving securing pins (6).

4. Closure device according to claim 1 or 2, characterised in that for the connection of the two hemispherical shells (7, 8) a weld seam (11) is arranged in the region of the fold (9), and one hemispherical shell (7) has a filling aperture (10).

5. Closure device according to claim 1 to 4, characterised in that the small-lump scrap is arranged completely or preponderantly in the refractory material of a hemispherical shell.

6. Closure device according to one of claims 1 to 5, characterised in that the scrap is so incorporated in the refractory material that the centre of gravity of the ball coincides with the geometric centre point of the ball.

7. Closure device according to one of claims 1 to 5, characterised in that the scrap is so incorporated in the refractory material that the centre of gravity of the ball is different from the geometric centre point of the ball.

8. Closure device for holding-back the slag during tapping from a converter, consisting of a ball of refractory material possibly with a metallic casing, said ball floating on the surface of the steel bath, characterised in that it is provided with means for accomodating a portion of synthetic slag for adjusting the desired viscosity of the slag floating on the surface of the steel bath.

9. Closure device according to claim 8, characterised in that the ball (1, 2; 7, 8) has a vessel (14) fixable in the outer region for accomodating the portion (13) of synthetic slag.

10. Closure device according to claim 8, characterised in that the portion (13) of synthetic slag is arranged in adhesively secured form on the outer region of the ball (1, 2; 7, 8).

## Revendications

1. Organe de fermeture pour retenir le laitier pendant la coulée d'un convertisseur, organe se composant d'une sphère destinée à flotter à la surface du bain d'acier et se composant d'un matériau réfractaire et d'une enveloppe métallique, organe caractérisé en ce que l'enveloppe métallique est formée de deux coquilles hémisphériques (1, 2; 7, 8) réunis pour former une sphère, ces deux coquilles étant en tôle d'acier et la sphère contient un mélange de matériau réfractaire et de ferraille en morceaux.

2. Organe de fermeture selon la revendication 1, caractérisé en ce qu'une coquille hémisphérique (2, 8) comporte à son bord extérieur une feuillure périphérique (3, 9) pour recevoir le bord extérieur de la seconde coquille hémisphérique (1, 7).

3. Organe de fermeture selon l'une quelconque des revendications 1 ou 2, caractérisé en ce que pour relier les deux coquilles hémisphériques (1, 2) le bord extérieur des deux coquilles comporte des perçages (4, 5) correspondants, répartis régulièrement à la périphérie des deux coquilles pour recevoir des tiges de blocage (6).

4. Organe de fermeture selon l'une quelconque des revendications 1 et 2, caractérisé en ce que pour relier les deux coquilles hémisphériques (7, 8), on réalise un cordon de soudure (11) au niveau de la feuillure (9) et l'une des coquilles hémisphériques (7) comporte un orifice de remplissage (10).

5. Organe de fermeture selon l'une quelconque des revendications 1 à 4, caractérisé en ce que la ferraille en petits morceaux est répartie en totalité ou en grande partie dans le matériau réfractaire d'une coquille hémisphérique.

6. Organe de fermeture selon l'une quelconque des revendications 1 à 5, caractérisé en ce que la ferraille est intégrée au matériau réfractaire de façon que le centre de gravité de la sphère coïncide avec le centre géométrique de la sphère.

7. Organe de fermeture selon l'une quelconque des revendications 1 à 5, caractérisé en ce que la ferraille est intégrée à la matière réfractaire de façon que le centre de gravité de la sphère s'écarte de son centre géométrique.

8. Organe de fermeture pour retenir le laitier pendant la coulée d'un convertisseur, organe composé d'une sphère flottant à la surface du bain d'acier, sphère réalisée en un matériau réfractaire avec le cas échéant une enveloppe métallique, organe caractérisé par des moyens pour recevoir une certaine quantité de laitier de synthèse pour obtenir la viscosité souhaitée du laitier flottant à la surface du bain d'acier.

9. Organe de fermeture selon la revendication 8, caractérisé en ce que la sphère (1, 2; 7, 8) comporte un récipient (14) susceptible d'être fixé dans sa partie extérieure pour recevoir une certaine quantité (13) de laitier de synthèse.

10. Organe de fermeture selon la revendication 8, caractérisé en ce que la partie (13) de laitier de synthèse est collée contre l'extérieur de la sphère (1, 2; 7, 8).

Fig.1

Fig.2

Fig.3

Fig.4

## Fig.5

## Fig. 6